# EUROPÄISCHE PATENTSCHRIFT

(11) **EP 3 378 608 B1**
(45) Veröffentlichungstag und Bekanntmachung des Hinweises auf die Patenterteilung: **18.05.2022**
(21) Anmeldenummer: 18163957.6
(22) Anmeldetag: 26.03.2018
(51) Int. Cl.: B25J 15/08, B25J 9/14, B25J 9/20

(54) **PNEUMATISCH BETRIEBENE HANDHABUNGSVORRICHTUNG MIT SCHALTVENTIL.**
PNEUMATICALLY OPERATED HANDLING DEVICE WITH SWITCHING VALVE.
DISPOSITIF DE MANUTENTION À COMMANDE PNEUMATIQUE AVEC VANNE DE COMMUTATION.

(30) Priorität: 24.03.2017 DE 102017106428
(43) Veröffentlichungstag der Anmeldung: 26.09.2018
(73) Patentinhaber: Schunk GmbH & Co. KG Spann- und Greiftechnik, 74348 Lauffen am Neckar (DE)
(72) Erfinder: FELLHAUER, Bruno, 74336 Brackenheim (DE); STANICKI, Andreas, 74226 Nordheim (DE)
(74) Vertreter: DREISS Patentanwälte PartG mbB

(56) Entgegenhaltungen:
- EP-B1- 0 205 141
- DE-A1- 3 640 689
- JP-A- S5 894 983
- JP-A- S62 228 388
- JP-A- 2004 154 909
- JP-B2- 5 355 129

## Beschreibung

Die Erfindung betrifft eine Handhabungsvorrichtung, insbesondere eine Linear-, Greif-, Spann-, Dreh- oder Schwenkvorrichtung.

Eine Linear-, Greif- oder Spannvorrichtung umfasst ein Grundgehäuse und wenigstens eine im Grundgehäuse verfahrbare Grundbacke oder eine Linearachse. Vorzugsweise sind, wie in der DE 100 13 022 A1 gezeigt, zwei Grundbacken vorgesehen, die aufeinander zu und voneinander weg bewegbar sind. Mit Greifvorrichtungen werden in der Regel Gegenstände gegriffen. Mit Spannvorrichtungen werden in der Regel Gegenstände festgesetzt, um diese dann zu bearbeiten. Auch wenn im nachfolgenden nur vom Greifen oder Spannen die Rede ist, ist damit stets auch das Spannen und Greifen gemeint.

Eine Dreh- oder Schwenkvorrichtung umfasst ein Grundgehäuse und wenigstens einen bezüglich des Grundgehäuses drehbaren Drehteller. Mit der Dreh- oder Schwenkvorrichtung, wie sie beispielsweise aus der DE 10 2009 017 055 A1 bekannt ist, wird beispielsweise eine am Drehteller angeordnete Greif- oder Spannvorrichtung gedreht oder gewendet. Auch wenn im nachfolgenden nur vom Drehen oder Schwenken die Rede ist, ist damit stets auch das Schwenken und Drehen gemeint.

Zur Positionierung der Grundbacken oder des Drehtellers wird ein Stellglied mittels eines pneumatischen Antriebs verstellt. Der pneumatische Antrieb ist beispielsweise ein Kolbenantrieb. Dieser umfasst einen Zylinder in dem ein Kolben beweglich angeordnet ist. Aus einer Bewegung des Kolbens resultiert eine entsprechende Bewegung der mindestens einen Grundbacke oder des Drehtellers. Eine Lage des Kolbens ist einer entsprechenden Position des Grundbacken oder des Drehtellers zuordenbar. Der Kolbenantrieb ist in der Regel über mindestens ein elektromagnetisch betätigbares Ventil ansteuerbar. Dieses verbindet wahlweise eine Druckquelle mit dem Zylinder, oder entlüftet diesen.

Der Kolbenantrieb umfasst entweder eine Feder, die den Kolben in eine Richtung im Zylinder vorspannt, oder zwei Ventile, die den Zylinder auf einander gegenüberliegenden Seiten des Kolbens wahlweise mit der Druckquelle verbinden oder entlüften können. Der Kolben ist dadurch in eine Lage bewegbar, in der ein Kräftegleichgewicht zwischen Druckkraft und Federkraft oder zwischen den Druckkräften auf beiden Seiten des Kolbens besteht.

Unterschiedliche Kolbenflächen zwischen den beiden Seiten eines Antriebskolbens des Kolbenantriebs bereiten Schwierigkeiten bei der Positionierung. Zur Positionierung wird daher beispielsweise die Position des Kolbens analog erfasst. Abhängig davon erfolgt eine Ventilregelung in einem geschlossenen Regelkreises. Es hat sich allerdings gezeigt, dass es wünschenswert ist, eine bei der Regelung entstehende Beanspruchung der Vorrichtung und eine damit verbundene Geräuschentwicklung zu reduzieren.

Aus der EP 0 205 141 B1 ist Handhabungsvorrichtung mit

Merkmalen des Oberbegriffs des Patentanspruchs 1 bekannt.

Die JPS62228388 offenbart einen pneumatisch betriebenen Greifer mit Stellglied und integrierter Steuereinrichtung, die ausgebildet ist, das Stellglied durch Schaltung eines Ventils in eine vorgebbare Lage zu bewegen.

Die EP2025949 offenbart ein hydraulische Ventilmodul mit Stellglied und Ventilen sowie Schaltventilen und integrierter Steuereinrichtung, wobei die Steuereinrichtung die Schaltventile im Fall eines durch einen Sensor signalisierten Fehlers betätigt.

Der Erfindung liegt die Aufgabe zugrunde, eine eingangs genannte Handhabungsvorrichtung bereitzustellen, die einen einfachen Aufbau aufweist und die eine effektive und prozesssichere Positionierung des Stellglieds an einer beliebigen Sollposition ermöglicht.

Diese Aufgabe wird mit einer Handhabungsvorrichtung in Form einer Linear-, Greif-, Spann-, Dreh- oder Schwenkvorrichtung mit den Merkmalen des Anspruchs 1 gelöst.

Durch das Schaltventil wird bei geeigneter Wahl der Schaltzeitpunkte durch Schließen des Schaltventils ein Volumen zwischen dem Schaltventil und dem Kolben eingeschlossen, der Zylinder mit der Druckquelle verbunden oder entlüftet. Dadurch ist eine beliebige Lage des Kolbens im Zylinder sowohl für einen Kolbenantrieb mit Feder als auch für einen Kolbenantrieb mit zweiseitigem Ventil zum Entlüften oder Verbinden mit der Druckquelle einstellbar. Dies ermöglichte eine effektive, prozesssichere Positionierung bei verminderter Beanspruchung und geringer Geräuschentwicklung.

Vorteilhafterweise sind ein erstes Ventil und ein zweites Ventil angeordnet, die mit dem Zylinder auf axial gegenüberliegenden Seiten des Kolbens verbunden sind, wobei durch das erste Ventil und/oder durch das zweite Ventil zur Beeinflussung der axialen Lage des Kolbens entweder die Druckquelle oder die Referenzdruckquelle, insbesondere Atmosphärendruck, mit dem Zylinder verbindbar ist, und wobei das Schaltventil zwischen dem ersten Ventil und dem Zylinder angeordnet ist, und oder wobei das Schaltventil zwischen dem zweiten Ventil und dem Zylinder angeordnet ist. Dadurch ist die beliebige Lage des Kolbens im Zylinder im Kolbenantrieb mit zweiseitig angeordneten Ventilen effektiv und prozesssicher bei verminderter Beanspruchung und geringer Geräuschentwicklung einstellbar. Es ist dabei unerheblich, ob das Schaltventil zwischen Zylinder und erstem Ventil oder zwischen Zylinder und zweitem Ventil angeordnet werden. Es können auch zwei Schaltventile, eines zwischen Zylinder und erstem Ventil und eines zwischen Zylinder und zweitem Ventil angeordnet werden.

Die Anordnung des Schaltventils ist insbesondere vorteilhaft, wenn eine erste Kolbenfläche größer ist als eine zweite Kolbenfläche, wobei die erste Kolbenfläche der Seite des Zylinders zugewandt ist, die mit dem ersten Ventil verbundenen ist, und wobei die zweite Kolbenfläche der Seite des Zylinders zugewandt ist, die mit dem zweiten Ventil verbundenen ist.

Durch die unterschiedlichen Flächen wirken bei demselben Druck unterschiedliche Kräfte am Kolben. Die genannten Vorteile des Schaltventils sind in einer derartigen Anordnung besonders groß, da ein ansonsten erforderlicher geschlossener Regelkreis zur Ansteuerung der Ventile vermieden wird.

Das Schaltventil ist vorzugsweise als elektromagnetisch betätigbares, stromlos geschlossenes Ventil ausgeführt. Dadurch bleibt ein aufgebauter Druck beim Ausschalten des Stroms oder einem Stromausfall auf einer Seite des Zylinders eingesperrt. Dadurch kann beispielsweise eine angefahrene Position beibehalten werden. Dies ist für die Positionen auf/zu und insbesondere Gegriffen mit nur einem Schaltventil möglich. Die zweite Seite des Kolbens entlüftet sich bei Stromausfall. Mit einem zweiten stromlos geschlossenen Schaltventil, das einen Druck auf der anderen Seite des Zylinders einsperrt, ist es zudem möglich auch eine beliebige Position beizubehalten.

Vorzugsweise ist ein Drucksensor angeordnet, mit dem ein Druck auf einer Seite des Zylinders erfassbar ist, wenn das Schaltventil geschlossen ist. Dies ermöglicht beispielsweise in einer Pause eine Dichtheitsprüfung.

Die Linear-, Greif-, Spann-, Dreh- oder Schwenkvorrichtung umfasst eine Steuereinrichtung, die ausgebildet ist Schaltzeitpunkte für die Ventile vorzugeben, um den Kolben axial in eine vorgebbare Lage für eine Sollposition des Stellglieds zu bewegen. Die Integration der Steuereinrichtung vermeidet zusätzliche Anschlüsse.

Die Steuereinrichtung ist ausgebildet, abhängig von der Sollposition des Stellglieds mindestens einen Schaltzeitpunkt für das Schaltventil vorzugeben, zu dem das Schaltventil geschlossen wird. Die Sollposition ist so unabhängig von externen Steuersignalen einstellbar.

Die Linear-, Greif-, oder Spannvorrichtung weist mindestens ein Grundbacken oder eine Linearachse auf, der mit dem Stellglied bewegungsgekoppelt und im Grundgehäuse verfahrbar angeordnet ist.

Alternativ umfasst das Stellglied einen Zahnstangenabschnitt, und die Dreh- oder Schwenkvorrichtung weist einen Drehteller mit mindestens einem Ritzel auf, das mit dem Zahnstangenabschnitt bewegungsgekoppelt und im Grundgehäuse drehbar angeordnet ist.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
Figur 1 die Seitenansicht einer Greif- oder Spannvorrichtung;
Figur 2 schematisch Teile eines Pneumatikersatzschaltplans für eine Linear-, Greif-, Spann-, Dreh- oder Schwenkvorrichtung.

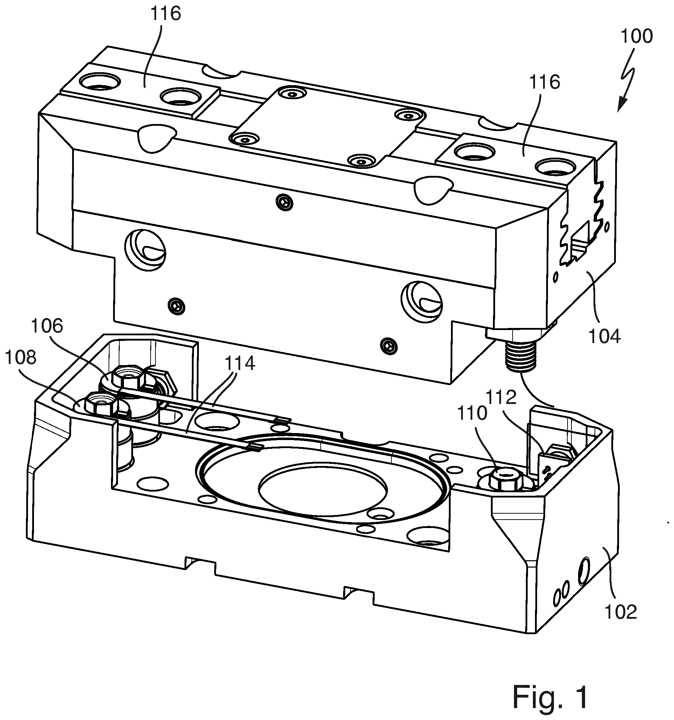

Figur 1 zeigt die Seitenansicht einer Greif- oder Spannvorrichtung. Die erfindungsgemäße Vorrichtung wird am Beispiel der Greif- oder Spannvorrichtung mit einem Grundgehäuse 100 beschrieben, ist jedoch nicht auf eine Greif- oder Spannvorrichtung beschränkt, sondern betrifft auch eine Dreh- oder Schwenkvorrichtung.

Figur 1 zeigt ein Steuermodul 102 und ein Greif- oder Spannmodul 104. Diese sind als Grundgehäuse 100 zusammenfügbar. Aufgrund der Anschaulichkeit sind das Steuermodul 102 und das Greif- oder Spannmodul 104 in Figur 1 getrennt dargestellt.

Das Steuermodul 102 umfasst ein erstes 3/2-Wegeventil 106, ein zweites 3/2-Wegeventil 108 und ein Schaltventil 110, das als 2/2-Wegeventil ausgebildet ist. Das Steuermodul 102 umfasst eine Steuereinrichtung 112 zum Ansteuern der Ventile 106, 108, 110 über Signalleitungen 114.

Im Grundgehäuse 100 ist wenigstens ein Stellglied beweglich angeordnet. Die in Figur 1 dargestellte Greif-, oder Spannvorrichtung weist zwei Grundbacken 116 auf, die mit dem Stellglied bewegungsgekoppelt und im Grundgehäuse 100 verfahrbar angeordnet sind. Das Stellglied umfasst beispielsweise ein Keilhakengetriebe, das, wie in DE 100 13 022 A1 beschrieben, durch einem Kolben verstellbar ist und die beiden Grundbacken bewegt. Die beiden Grundbacken 116 sind im Beispiel Teil eines Greifers, und werden zum Öffnen des Greifers voneinander entfernt, und zum Schließen des Greifers aufeinander zubewegt. Allgemein ist mindestens ein derartiger Grundbacken vorgesehen.

Im Falle der Dreh- oder Schwenkvorrichtung umfasst das Stellglied alternative dazu beispielsweise einen Zahnstangenabschnitt. Die Dreh- oder Schwenkvorrichtung weist einen Drehteller mit einem Ritzel auf, das mit dem Zahnstangenabschnitt bewegungsgekoppelt und im Grundgehäuse drehbar angeordnet ist. Das Ritzel wird in diesem Fall zum Positionieren bewegt.

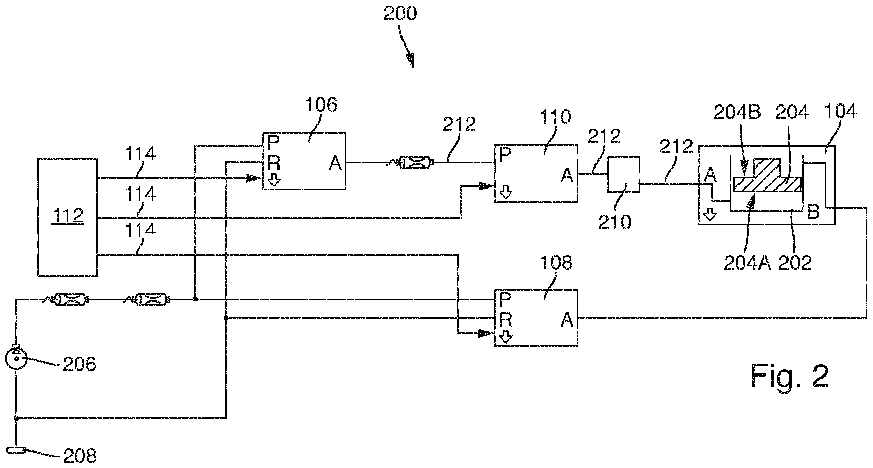

Figur 2 zeigt schematisch Teile eines Pneumatikersatzschaltplans 200 für eine derartige Linear-, Greif-, Spann-, Dreh- oder Schwenkvorrichtung. Anhand dieser wird im Folgenden die Funktion des Steuermoduls 102 und des Greif- oder Spannmoduls 104 im Grundgehäuse 100 beschrieben.

Als Ventile 106, 108, 110 werden vorzugsweise Mikroventile mit Federrückstellung eingesetzt. Derartige Ventile bestehen aus den Teilen Ventilpatrone, Ventilsitz und Deckel und weisen zusätzlich 3 bzw. 2 Anschlüsse auf. In einer Ruhestellung ist ein Arbeitsanschluss A von einem Versorgungsdruck P getrennt. Beim 3/2-Wegeventil wird der Arbeitsanschluss A im stromlosen Zustand über einen Ausgang R entlüftet. Beim 2/2-Wegeventil entfällt der Ausgang für die Entlüftung, d.h. dieses Ventil ist stromlos geschlossen. Bei der Entlüftung stellt sich beispielsweise ein Referenzdruck, beispielsweise Atmosphärendruck, im entlüfteten Abschnitt ein.

Das Greif- oder Spannmodul 104 umfasst einen sich axial erstreckenden Zylinder 202 und einem mit dem Stellglied bewegungsgekoppelten Kolben 204, der im Zylinder 202 axial beweglich angeordnet ist. Eine erste Kolbenfläche 204A ist größer ist als eine zweite Kolbenfläche 204B, wobei die erste Kolbenfläche 204A der Seite des Zylinders 202 zugewandt ist, die mit dem ersten 3/2-Wegeventil 106 verbundenen ist, und wobei die zweite Kolbenfläche 204B der Seite des Zylinders 202 zugewandt ist, die mit dem zweiten 3/2 Wegeventil 108 verbundenen ist.

Im Grundgehäuse 100 sind im Beispiel das erste 3/2-Wegeventil 106 und das zweite 3/2-Wegeventil 108 mit dem Zylinder 202 auf axial gegenüberliegenden Seiten des Kolbens 204 verbunden. Durch das erste 3/2-Wegeventil 106 ist zur Beeinflussung einer axialen Lage des Kolbens 204 entweder eine Druckquelle 206 oder eine Referenzdruckquelle 208, insbesondere Atmosphärendruck, mit dem Zylinder 202 verbindbar. Durch das zweite 3/2-Wegeventil 106 ist zur Beeinflussung einer axialen Lage des Kolbens 204 entweder die Druckquelle 206 oder die Referenzdruckquelle 208, insbesondere Atmosphärendruck, mit dem Zylinder 202 verbindbar. In einer bevorzugten Ausgestaltung ist die Referenzdruckquelle 208 ein momentaner Atmosphärendruck, der in einer unmittelbaren Umgebung der Linear-, Greif-, Spann-, Dreh- oder Schwenkvorrichtung herrscht. Eine Entlüftung findet in diesem Fall in die Umgebung statt. Die Druckquelle 206 stellt im Beispiel einen höheren Druck bereit, als die Referenzdruckquelle 208.

Der jeweilige Arbeitsanschluss A ist über Druckleitungen entweder mit der Druckquelle 206, beispielsweise von 6 bar, oder mit der Referenzdruckquelle 208, insbesondere Atmosphärendruck, verbindbar.

Im Grundgehäuse 100 ist im Beispiel das Schaltventil 110 in einer Verbindung 212 zwischen dem ersten 3/2-Wegeventil 106 und dem Zylinder 202 angeordnet. Das Schaltventil 110 ist zusätzlich oder alternativ dazu in einer Verbindung zwischen dem zweiten 3/2-Wegeventil 108 und dem Zylinder 202 angeordnet.

Das Schaltventil 110 ist als elektromagnetisch betätigbares 2/2-Wegeventil zum wahlweisen Verbinden oder Trennen des ersten 3/2 Wegeventils 106 und des Zylinders 202 angeordnet. Das Schaltventil 110 ist als elektromagnetisch betätigbares, stromlos geschlossenes Ventil ausgeführt. Dadurch bleibt ein Druck auch ohne Strom zwischen dem Schaltventil 110 und dem Zylinder 202 eingesperrt. Wenn je ein Schaltventil 110 in der Verbindung zwischen dem ersten 3/2-Wegeventil 106 und dem Zylinder 202in der Verbindung zwischen dem zweiten 3/2-Wegeventil 108 und dem Zylinder 202 angeordnet ist, ist beispielsweise eine Greifkrafterhaltung oder eine Dämpfung in beide Richtungen auch bei Stromausfall möglich.

Im Grundgehäuse 100 ist im Beispiel optional ein Drucksensor 210 zwischen dem Schaltventil 110 und dem Zylinder 202 angeordnet, mit dem ein Druck auf dieser Seite des Zylinders 202 erfassbar ist, wenn das Schaltventil 110 geschlossen ist. Dadurch ist eine Dichtheit eines Abschnitts zwischen dem Schaltventil 110 und dem Zylinder 202 prüfbar, indem das Schaltventil 110 geschlossen und ein erwarteter Druck mit einem gemessenen Druck verglichen wird.

Die Ventile 106, 108, 110 sowie der Drucksensor 210 können auch außerhalb des Grundgehäuses 100 angeordnet, und über Druckleitungen mit entsprechenden Einlässen des Grundgehäuses 100 verbunden sein.

Die Steuereinrichtung 112 ist ausgebildet über die Signalleitungen 114 Schaltzeitpunkte für die Ventile 106, 108, 110 vorzugeben, um den Kolben 204 axial in eine vorgebbare Lage für eine Sollposition des Stellglieds zu bewegen. Die Steuereinrichtung 112 ist insbesondere ausgebildet, abhängig von der Sollposition des Stellglieds mindestens einen Schaltzeitpunkt für das Schaltventil 110 vorzugeben, zu dem das Schaltventil 110 geschlossen wird.

Durch geeignete Wahl der Schaltzeitpunkte ist somit eine Vorpositionierung des Greifers möglich. Damit ist aufgrund des kürzeren verbleibenden Verfahrwegs eine schnellere Endpositionierung des Greifers möglich. Zudem sind beliebige Zwischenpositionen einstellbar in denen der Greifer beispielsweise nicht vollständig geöffnet oder geschlossen ist. Außerdem kann dadurch ein langsameres Verfahren, insbesondere eine Dämpfung der Bewegung vor einem Endanschlag, erreicht werden.

Insbesondere bei Dreh- oder Schwenkvorrichtungen in denen zusätzlich zum Antriebskolben eine verstellbare Dämpfung über einen mit dem Antriebskolben zusammenwirkenden Dämpfer vorgesehen ist, kann das langsamere Fahren die Beanspruchung des Stoßdämpfers reduzieren. Dies ist auch möglich durch eine Verzögerung vor dem Auftreffen, durch einen Gegendruckimpuls und/oder durch ein zeitweises Verschließen der vorher zum Verfahren entlüfteten Kolbenseite, wodurch sich aufgrund einer Massenträgheit des Antriebskolbens eine Kompression eines Kolbenraumes auf dieser Kolbenseite ein deutlich höheren Druck ergibt, welcher den Antriebskolben abbremst. Dadurch ist der Verschleiß geringer und der Tausch und die Einstellung des Stoßdämpfers weniger häufig erforderlich.

## Patentansprüche

1. Handhabungsvorrichtung in Form einer Linear-, Greif-, Spann-, Dreh- oder Schwenkvorrichtung, mit einem Grundgehäuse (100), mit wenigsten einem im Grundgehäuse (100) beweglich angeordneten Stellglied, mit einem sich axial erstreckenden Zylinder (202) und einem mit dem Stellglied bewegungsgekoppelten Kolben (204), der im Zylinder (202) axial beweglich angeordnet ist, wobei ein Ventil (106) angeordnet ist, das auf einer Seite des Kolbens (204) mit dem Zylinder (202) verbunden ist, wobei durch das Ventil (106) zur Beeinflussung einer axialen Lage des Kolbens (204) entweder eine Druckquelle (206) oder eine Referenzdruckquelle (208), insbesondere Atmosphärendruck, mit dem Zylinder (202) verbindbar ist, wobei in einer Verbindung (212) zwischen dem Ventil (106) und dem Zylinder (202) ein Schaltventil (110) zum wahlweisen Öffnen oder Schließen der Verbindung (212) angeordnet ist, **dadurch gekennzeichnet, dass** eine integrierte Steuereinrichtung (112) vorgesehen ist, die ausgebildet ist Schaltzeitpunkte für die Ventile (106, 110) vorzugeben, um den Kolben (204) axial in eine vorgebbare Lage für eine Sollposition des Stellglieds zu bewegen und die weiter ausgebildet ist, abhängig von der Sollposition des Stellglieds mindestens einen Schaltzeitpunkt für das Schaltventil (110) vorzugeben, zu dem das Schaltventil (110) geschlossen wird.

2. Vorrichtung nach Anspruch 1, wobei das Grundgehäuse ein Greif- oder Spannmodul (104) und ein Steuermodul (102) aufweist, wobei das Steuermodul (102) das Ventil (106), das Schaltventil (110) und die Steuereinrichtung (112) umfasst.

3. Vorrichtung nach Anspruch 1 oder 2, wobei ein erstes Ventil (106) und ein zweites Ventil (108) angeordnet sind, die mit dem Zylinder (202) auf axial gegenüberliegenden Seiten des Kolbens (204) verbunden sind, wobei durch das erste Ventil (106) und/oder durch das zweite Ventil (108) zur Beeinflussung der axialen Lage des Kolbens (204) entweder die Druckquelle (206) oder die Referenzdruckquelle (208), insbesondere Atmosphärendruck, mit dem Zylinder (202) verbindbar ist, und wobei das Schaltventil (110) zwischen dem ersten Ventil (106) und dem Zylinder (202) angeordnet ist, und oder wobei das Schaltventil (110) zwischen dem zweiten Ventil (108) und dem Zylinder (202) angeordnet ist.

4. Vorrichtung nach Anspruch 3, **dadurch gekennzeichnet, dass** eine erste Kolbenfläche (204A) größer ist als eine zweite Kolbenfläche (204B), wobei die erste Kolbenfläche (204A) der Seite des Zylinders (202) zugewandt ist, die mit dem ersten Ventil (106) verbundenen ist, und wobei die zweite Kolbenfläche (204B) der Seite des Zylinders (202) zugewandt ist, die mit dem zweiten Ventil (108) verbundenen ist.

5. Vorrichtung nach einem der Ansprüche 1 bis 4, **dadurch gekennzeichnet, dass** das Schaltventil (110) als elektromagnetisch betätigbares, stromlos geschlossenes Ventil ausgeführt ist.

6. Vorrichtung nach Anspruch 5, **dadurch gekennzeichnet, dass** ein Drucksensor (210) angeordnet ist, mit dem ein Druck auf einer Seite des Zylinders (202) erfassbar ist, wenn das Schaltventil (110) geschlossen ist.

7. Vorrichtung in Form einer Linear-, Greif-, oder Spannvorrichtung nach einem der vorherigen Ansprüche, **dadurch gekennzeichnet, dass** die Greif-, oder Spannvorrichtung mindestens ein Grundbacken (116) oder eine Linearachse aufweist, der mit dem Stellglied bewegungsgekoppelt und im Grundgehäuse (110) verfahrbar angeordnet ist.

8. Vorrichtung in Form einer Dreh- oder Schwenkvorrichtung nach einem der vorherigen Ansprüche, **dadurch gekennzeichnet, dass** das Stellglied eine Zahnstangenabschnitt umfasst, und wobei die Dreh- oder Schwenkvorrichtung mindestens ein Ritzel aufweist, das mit dem Zahnstangenabschnitt bewegungsgekoppelt und im Grundgehäuse (100) drehbar angeordnet ist.

## Claims

1. Handling apparatus in the form of a linear, gripping, clamping, rotary or pivoting device, comprising a main housing (100), comprising at least one actuator that is movably arranged in the main housing (100), comprising an axially extending cylinder (202) and a piston (204) that is movement-coupled to the actuator, which piston is arranged so as to be axially movable in the cylinder (202), a valve (106) being arranged, which is connected to the cylinder (202) on one face of the piston (204), it being possible for either a pressure source (206) or a reference pressure source (208), in particular atmospheric pressure, to be connected to the cylinder (202) by means of the valve (106) in order to influence an axial position of the piston (204), a switching valve (110) being arranged in a connection (212) between the valve (106) and the cylinder (202) in order to selectively open or close the connection (212), **characterized in that** an integrated control device (112) is provided which is designed to specify switching time points for the valves (106, 110) in order to move the piston (204) axially into a specifiable position for a target position of the actuator and which control device is further designed, depending on the target position of the actuator, to specify at least one switching time point for the switching valve (110) at which the switching valve (110) is closed.

2. Apparatus according to claim 1, wherein the main housing has a gripping or clamping module (104) and a control module (102), wherein the control module (102) comprises the valve (106), the switching valve (110) and the control device (112).

3. Apparatus according to claim 1 or claim 2, wherein a first valve (106) and a second valve (108) are arranged, which are connected to the cylinder (202) on axially opposite faces of the piston (204), wherein either the pressure source (206) or the reference pressure source (208), in particular atmospheric pressure, can be connected to the cylinder (202) by means of the first valve (106) and/or by means of the second valve (108) in order to influence the axial position of the piston (204), and wherein the switching valve (110) is arranged between the first valve (106) and the cylinder (202), and/or wherein the switching valve (110) is arranged between the second valve (108) and the cylinder (202).

4. Apparatus according to claim 3, **characterized in that** a first piston surface (204A) is larger than a second piston surface (204B), the first piston surface (204A) facing the face of the cylinder (202) which is connected to the first valve (106), and the second piston surface (204B) facing the face of the cylinder (202) which is connected to the second valve (108).

5. Apparatus according to any of claims 1 to 4, **characterized in that** the switching valve (110) is designed as an electromagnetically actuable, normally closed valve.

6. Apparatus according to claim 5, **characterized in that** a pressure sensor (210) is arranged, with which a pressure on one face of the cylinder (202) can be detected when the switching valve (110) is closed.

7. Apparatus in the form of a linear, gripping or clamping device according to any of the preceding claims, **characterized in that** the gripping or clamping device has at least one base jaw (116) or a linear axis which is movement-coupled to the actuator and is arranged to be movable in the main housing (110).

8. Apparatus in the form of a rotary or pivoting device according to any of the preceding claims, **characterized in that** the actuator comprises a rack portion, and the rotary or pivoting device having at least one pinion which is movement-coupled to the rack portion and rotatably arranged in the main housing (100).

## Revendications

1. Dispositif de manipulation sous forme d'un dispositif linéaire, de préhension, de serrage, rotatif ou pivotant, avec un boîtier de base (100), avec au moins un actionneur disposé de manière mobile dans le boîtier de base (100), avec un cylindre (202) s'étendant axialement et un piston (204) accouplé en mouvement à l'actionneur, qui est disposé de manière mobile axialement dans le cylindre (202), dans lequel une soupape (106) est disposée, qui est reliée sur une face du piston (204) au cylindre (202), dans lequel soit une source de pression (206) soit une source de pression de référence (208), en particulier la pression atmosphérique, peut être reliée au cylindre (202) par la soupape (106) pour influencer une position axiale du piston (204), dans lequel une soupape de commutation (110) pour ouvrir ou fermer sélectivement la liaison (212) est disposée dans une liaison (212) entre la soupape (106) et le cylindre (202), **caractérisé en ce qu'**un système de commande (112) intégré est prévu, qui est réalisé pour prédéfinir des moments de commutation pour les soupapes (106, 110), afin de déplacer le piston (204) axialement dans une position pouvant être prédéfinie pour une position théorique de l'actionneur et qui est réalisé en outre pour prédéfinir en fonction de la position théorique de l'actionneur au moins un moment de commutation pour la soupape de commutation (110) auquel la soupape de commutation (110) est fermée.

2. Dispositif selon la revendication 1, dans lequel le boîtier de base présente un module de préhension ou de serrage (104) et un module de commande (102), dans lequel le module de commande (102) comprend la soupape (106), la soupape de commutation (110) et le système de commande (112).

3. Dispositif selon la revendication 1 ou 2, dans lequel une première soupape (106) et une deuxième soupape (108) sont disposées, qui sont reliées au cylindre (202) sur des faces axialement opposées du piston (204), dans lequel soit la source de pression (206) soit la source de pression de référence (208), en particulier la pression atmosphérique, peut être reliée au cylindre (202) par la première soupape (106) et/ou par la deuxième soupape (108) pour influencer la position axiale du piston (204), et dans lequel la soupape de commutation (110) est disposée entre la première soupape (106) et le cylindre (202), et ou dans lequel la soupape de commutation (110) est disposée entre la deuxième soupape (108) et le cylindre (202).

4. Dispositif selon la revendication 3, **caractérisé en ce qu'**une première surface de piston (204a) est plus grande qu'une deuxième surface de piston (204b), dans lequel la première surface de piston (204a) est tournée vers la face du cylindre (202) qui est reliée à la première soupape (106), et dans lequel la deuxième surface de piston (204b) est tournée vers la face du cylindre (202) qui est reliée à la deuxième soupape (108).

5. Dispositif selon l'une quelconque des revendications 1 à 4, **caractérisé en ce que** la soupape de commutation (110) est conçue en tant que soupape normalement fermée, pouvant être actionnée de manière électromagnétique.

6. Dispositif selon la revendication 5, **caractérisé en ce qu'**un capteur de pression (210) est disposé, avec lequel une pression sur une face du cylindre (202) peut être détectée, lorsque la soupape de commutation (110) est fermée.

7. Dispositif sous forme d'un dispositif linéaire, de préhension, ou de serrage selon l'une quelconque des revendications précédentes, **caractérisé en ce que** le dispositif de préhension ou de serrage présente au moins une mâchoire de base (116) ou un axe linéaire, qui est accouplé en mouvement à l'actionneur et disposé de manière déplaçable dans le boîtier de base (100).

8. Dispositif sous forme d'un dispositif rotatif ou pivotant selon l'une quelconque des revendications précédentes, **caractérisé en ce que** l'actionneur comprend une partie de crémaillère, et dans lequel le dispositif rotatif ou pivotant présente au moins un pignon, qui est accouplé en mouvement à la partie de crémaillère et disposé de manière rotative dans le boîtier de base (100).
